# FASCICULE DE BREVET EUROPEEN

(11) **EP 4 072 882 B1**
(45) Date de publication et mention de la délivrance du brevet: **01.01.2025**
(21) Numéro de dépôt: 20807041.7
(22) Date de dépôt: 19.11.2020
(51) Int. Cl.: B60K 11/04, B60K 11/08

(54) **JOINT D'ÉTANCHÉITÉ SOUS RADIATEUR**
DICHTUNG UNTER EINEM KÜHLER
SEALING UNDER A RADIATOR

(30) Priorité: 10.12.2019 FR 1914071
(43) Date de publication de la demande: 19.10.2022
(73) Titulaire: Ampere SAS, 92100 Boulogne-Billancourt (FR)
(72) Inventeur: BUI, Joseph, 78130 Les Mureaux (FR); SOLTOIAN, Serghei, 91350 Grigny (FR)
(74) Mandataire: Renault Group
(86) Numéro de dépôt international: PCT/EP2020/082652
(87) Numéro de publication internationale: WO 2021/115752

(56) Documents cités:
- EP-A1- 0 950 555
- EP-A1- 3 315 890
- EP-B1- 0 950 555
- EP-B1- 3 315 890
- US-B2- 8 408 344

## Description

La présente invention concerne un dispositif d'étanchéité pour un échangeur de chaleur de type radiateur d'un véhicule automobile.

Dans les véhicules automobiles, il est nécessaire de diriger le flux d'air d'une part, au niveau d'un radiateur, de façon à permettre de maintenir une température de fonctionnement appropriée du moteur, d'autre part, au niveau d'un condenseur pour permettre le refroidissement du réfrigérant du système de climatisation du véhicule. Cependant, lorsque le véhicule est en mouvement, les régions situées derrière le radiateur et le condenseur comprennent généralement des régions à basse pression. En raison de la disposition des composants dans le compartiment moteur, il existe généralement un espace entre le bas du radiateur et le haut du support de radiateur. Ainsi, l'air sous haute pression situé devant le radiateur et le condenseur a tendance à fuir à travers cet espace, ce qui provoque une traînée aérodynamique sur le véhicule. Or, l'aérodynamisme d'un véhicule automobile est une caractéristique importante car il influence notamment la consommation de carburant ainsi que les performances du véhicule, ce qui est particulièrement important lorsque le véhicule se déplace à grande vitesse. Pour minimiser la traînée sur le véhicule, il est donc souhaitable d'empêcher l'air de passer sous le radiateur et de le diriger sous le véhicule.

Actuellement, pour obturer l'espace entre le bas du radiateur et le haut du support de radiateur et ainsi assurer l'étanchéité vis-à-vis de l'air haute pression des régions situées derrière le radiateur et le condenseur, une solution connue consiste à rapporter des mousses, fixées par collage au radiateur ou au support de radiateur. Ce type d'installation d'étanchéité n'est toutefois pas complètement satisfaisant. La pose de la mousse est chronophage et, de surcroît, l'étanchéité ne tient pas dans le temps dans la mesure où la mousse utilisée à tendance à s'abraser.

On connaît également du document US8408344, un élément d'étanchéité pour un ensemble de radiateur du type comprenant un radiateur et un condenseur monté sur une face avant du radiateur. L'ensemble de radiateur est conçu pour être positionné dans le compartiment moteur d'un véhicule de sorte que le fond du radiateur soit positionné de façon adjacente à une surface supérieure d'un élément de support profilé de radiateur, en étant espacé de la surface supérieure de l'élément de support de radiateur, créant ainsi un intervalle entre le fond du radiateur et la surface supérieure de l'élément de support de radiateur. L'élément d'étanchéité est prévu pour être disposé sous l'ensemble de radiateur. Il est constitué d'un joint en matière thermoplastique formé par extrusion, s'étendant sous toute la largeur de l'ensemble de radiateur. Le joint comprend principalement deux parties respectivement rigide et souple. La partie plus rigide comporte un connecteur de montage de section transversale en forme de U, destiné à être assemblé par clipsage à un élément de joue inférieur couplé au radiateur, et la partie plus souple comporte une lame flexible qui s'étend sous le connecteur de montage sur toute la largeur de celui-ci, à l'opposé de élément de joue inférieur, et qui est destinée à venir en contact avec la surface supérieure de l'élément de support de radiateur lorsque le radiateur vient être positionné sur celui-ci, jouant ainsi un rôle de barrage et de déflecteur d'air pour assurer la fonction d'étanchéité.

Cependant, l'élément d'étanchéité décrit dans ce document ne permet pas d'assurer de façon optimale la fonction d'étanchéité entre le fond du radiateur et la face supérieure de l'élément de support de radiateur. En particulier, dans certaines situations, notamment lorsque le véhicule se déplace à haute vitesse, le connecteur peut s'avérer être insuffisamment maintenu, au risque que le déflecteur ne puisse jouer correctement son rôle.

Un but de l'invention est de proposer un dispositif d'étanchéité amélioré sous radiateur de véhicule automobile.

A cette fin, la présente invention concerne un dispositif d'étanchéité apte à obturer un passage d'air sous un radiateur d'un véhicule automobile, comprenant un joint d'étanchéité en deux parties, respectivement une partie relativement plus rigide et une partie relativement plus souple, la partie relativement plus rigide étant formé d'un profilé adapté à coopérer par clipsage avec une joue inférieure du radiateur constituée d'une plaque formant le fond du radiateur et présentant une paire de bords tombés opposés s'étendant sensiblement verticalement sous le fond du radiateur et la partie relativement plus souple comportant au moins une lèvre d'étanchéité flexible adaptée à s'étendre sous le profilé à l'opposé de la joue inférieure lorsque le joint d'étanchéité est monté sous le radiateur, caractérisé en ce que le profilé présente une section transversale en forme de U, dont chaque branche est adaptée à s'engager sur un bord tombé respectif de ladite paire de bords tombés opposés de la joue inférieure du radiateur, lesdites branches du profilé en U étant adaptées pour coopérer par friction avec au moins une paroi externe d'un bord tombé respectif de ladite paire de bords tombés opposés de la joue inférieure du radiateur, tandis que l'âme du profilé en U est destinée à s'étendre en regard d'une face de fond du radiateur s'étendant entre ladite paire de bords tombés.

Grâce à cet agencement, en particulier de son organe de connexion avec la joue inférieure du radiateur, le dispositif d'étanchéité peut être fixé par clipsage sur les deux bords tombés à la fois de la joue inférieure couplée au radiateur et encadre complètement par l'extérieur au moins les deux bords tombés opposés de la joue inférieure du radiateur, rendant l'assemblage particulièrement robuste et pérenne.

Avantageusement, chaque branche du profilé en U peut comporter une gorge de clipsage dans laquelle est destiné à venir se clipser un bord tombé respectif de ladite paire de bords tombés opposés de la joue inférieure du radiateur. De la sorte, les bords tombés respectifs de la paire de bords tombés opposés de la joue inférieure du radiateur peuvent venir s'engager à l'intérieur des gorges de clipsages des branches du profilé en U, dont les faces internes opposées coopèrent par friction respectivement avec les parois interne et externe de chaque bord tombé respectif.

Avantageusement, le dispositif d'étanchéité comprend au moins une lèvre d'étanchéité s'étendant depuis au moins une branche du profilé en U.

Selon un mode de réalisation particulier, la présence d'au moins une lèvre d'étanchéité s'étendant depuis chacune des branches respectives du U permet d'améliorer l'efficacité de la fonction d'étanchéité tout en procurant une certaine modularité en jouant sur leur nombre et/ou disposition relative sur chacune des branches du U, dans le but de s'adapter à différentes configurations d'étanchéité.

En particulier, selon différentes variantes de réalisation possibles :
le dispositif peut comprendre au moins une lèvre d'étanchéité formée au niveau de chaque branche du profilé en U, lesdites lèvres d'étanchéité s'étendant dans des plans sensiblement orthogonaux au plan de l'âme du profilé en U ;
le dispositif peut comprendre au moins une lèvre d'étanchéité formées au niveau de chaque branche du profilé en U, lesdites lèvres d'étanchéité s'étendant suivant des plans respectifs divergents par rapport au plan de l'âme du profilé en U ;
le dispositif peut comprendre au moins une lèvre d'étanchéité formées au niveau de chaque branche du profilé en U, lesdites lèvres d'étanchéité se rejoignant de façon à former un unique bourrelet dont la concavité est orientée vers l'âme du profilé en U ;
le dispositif peut comprendre au moins deux lèvres d'étanchéité pouvant s'étendre depuis au moins une branche du profilé en U suivant différents plans d'orientation respectifs.

Selon un mode de réalisation, chaque lèvre d'étanchéité s'étend depuis une extrémité libre d'une branche respective du profilé en U, à l'opposé de l'âme du profilé en U par rapport aux branches respectives du profilé en U.

Avantageusement, selon ce mode de réalisation, l'âme du profilé en U forme un talon destiné à venir en appui avec la face de fond du radiateur s'étendant entre les deux bords tombés de ladite paire de bords tombés opposés de joue inférieure du radiateur. Ainsi, la liaison entre le dispositif d'étanchéité et la partie inférieure du radiateur au niveau de la joue inférieure s'en trouve encore améliorée.

Selon un autre mode de réalisation, chaque lèvre d'étanchéité s'étenddepuis un pied d'une branche respective du profilé en U, à l'opposé des branches respectives du profilé en U par rapport à l'âme du profilé en U.

Avantageusement, selon cet autre mode de réalisation, l'âme du profilé en U peut comporter une gorge de clipsage intermédiaire agencée entre les gorges de clipsage des branches respectives du profilé en U. Ainsi, grâce à cet agencement, l'organe de fixation, pour une même section, peut s'adapter à différentes épaisseurs de radiateur, respectivement une première épaisseur relativement plus grande en utilisant ensemble les gorges de clipsage des branches respectives du profilé en U et une seconde épaisseur relativement plus petite en utilisant la gorge de clipsage intermédiaire ensemble avec l'une ou l'autre des gorges de clipsage des branches respectives du profilé en U.

L'invention concerne également un véhicule automobile comprenant une traverse support de radiateur s'étendant en travers d'un compartiment moteur du véhicule et un module d'échange de chaleur comprenant un radiateur positionné sur la traverse support de radiateur, une joue inférieure couplée au radiateur et un dispositif d'étanchéité tel que décrit ci-dessus, ladite au moins une lèvre d'étanchéité étant adaptée pour venir obturer de façon continue des passages d'air entre le fond du radiateur et la traverse support de radiateur.

D'autres caractéristiques et avantages de la présente invention apparaîtront plus clairement à la lecture de la description suivante donnée à titre d'exemple illustratif et non limitatif et faite en référence aux figures suivantes :
[Fig. 1] est une vue en coupe en perspective, depuis le côté droit du véhicule, de la zone d'implantation de la partie inférieure du radiateur dans le véhicule automobile, avec un dispositif d'étanchéité selon l'invention en position ;
Fig. 2] est une vue isolée en perspective du dispositif d'étanchéité de la figure 1 ;
[Fig. 3a] est une vue de détail en perspective d'un dispositif d'étanchéité selon un mode de réalisation de l'invention ;
[Fig. 3b] est une vue de détail en perspective du dispositif d'étanchéité de la figure 3a, avec la partie relativement plus souple du dispositif d'étanchéité réalisée selon une variante ;
[Fig. 3c] est une vue de détail en perspective du p du dispositif d'étanchéité de la figure 3a, avec la partie relativement plus souple du dispositif d'étanchéité réalisée selon une autre variante ;
[Fig. 4a] est une vue de détail en perspective d'un dispositif d'étanchéité selon un autre mode de réalisation de l'invention, avec la partie relativement plus souple du dispositif d'étanchéité réalisée selon encore une autre variante ;
[Fig. 4b] est une vue de détail en perspective d'une variante de réalisation du dispositif d'étanchéité de la figure 4a, dans une première configuration d'utilisation ;
[Fig. 4c] est une vue de détail en perspective du dispositif d'étanchéité de la figure 4b, dans une seconde configuration d'utilisation ;
[Fig. 4d] est une vue de détail en perspective d'une variante de réalisation du dispositif d'étanchéité illustré aux figures 4a et 4b ;
[Fig. 5] est une vue de détail en perspective d'un dispositif d'étanchéité selon encore un autre mode de réalisation de l'invention.

Dans la suite de la description, les termes « supérieur», « inférieur », « longitudinal », « transversal », « vertical », haut, bas etc. sont définis par référence au système d'axe orthogonal usuel des véhicules automobiles représenté sur les figures, possédant un axe longitudinal X dirigé de l'avant vers l'arrière du véhicule, un axe transversal Y dirigé vers la droite, et un axe vertical Z dirigé vers le haut.

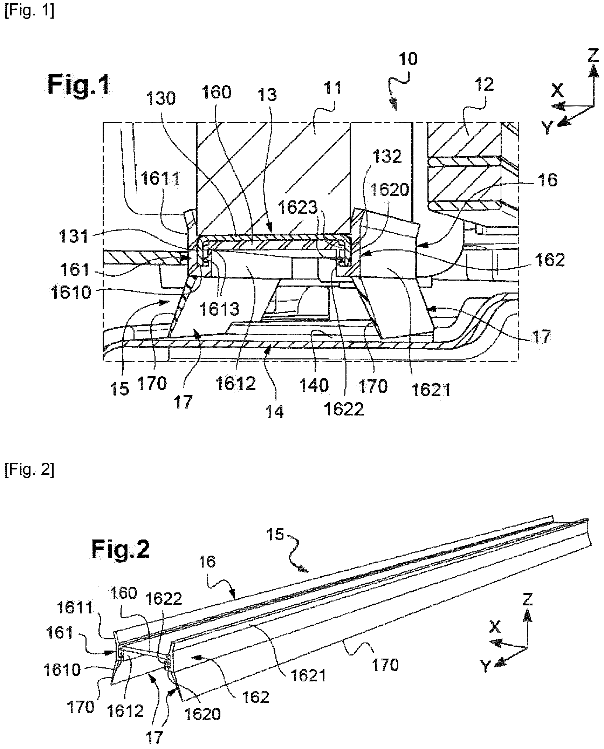

La figure 1 représente schématiquement la zone d'implantation en face avant d'un véhicule automobile de la partie inférieure d'un module d'échange de chaleur 10 comportant un radiateur 11 et un condenseur 12. Le radiateur 11 comprend classiquement un faisceau de tubes de circulation de fluide caloporteur. Deux boîtes collectrices non représentées, disposées de chaque côté du radiateur suivant la direction transversale et opposées par rapport au faisceau de tubes, sont prévues pour accueillir respectivement l'une et l'autre des extrémités de chacun des tubes du faisceau de tubes. Une entrée de fluide est en communication avec l'une de ces boîtes, tandis qu'une sortie de fluide est en communication avec l'autre boîte.

Au dessus et au-dessous du faisceau de tubes du radiateur, sont disposées deux plaques, encore appelées joues, respectivement supérieure et inférieure, destinées à protéger l'ensemble des tubes des parties respectives supérieure et inférieure du radiateur. Sur la figure 1, seule la joue inférieure 13 s'étendant sous le faisceau de tubes du radiateur, est représentée. La joue inférieure 13 est constituée d'une plaque 130, constituant le fond du radiateur et qui s'étend sous le faisceau de tubes sur toute la largeur du radiateur, et de deux bords tombés opposés 131 et 132, s'étendant sensiblement verticalement sous le fond 130 du radiateur. Autrement dit, les deux bords tombés 131, 132 s'étendent suivant deux plans verticaux transversaux parallèles espacés sensiblement de l'épaisseur du radiateur.

La zone d'implantation du module d'échange de chaleur 10 comprend une traverse support de radiateur 14, qui s'étend en travers du compartiment moteur du véhicule. Le module d'échange de chaleur est positionné de sorte que le fond du radiateur 130 soit adjacent à une surface supérieure 140 de la traverse 14. Comme illustré à la figure 1, lorsque le radiateur est fixé sur la traverse 14, le fond du radiateur se trouve positionnée à une certaine distance de la surface supérieure 140 de la traverse 14, créant ainsi un espace entre le fond du radiateur et la surface supérieure de la traverse, que le joint d'étanchéité 15 de l'invention vise précisément à venir obturer pour bloquer le passage d'air à travers cet espace.

Le joint d'étanchéité 15 de l'invention, destiné à être utilisé avec le radiateur 11 de la figure 1, comporte deux parties, respectivement une première partie relativement plus rigide 16, se présentant sous la forme d'un profilé jouant le rôle d'un organe de connexion du joint, prévu pour coopérer par clipsage avec la joue inférieure 13 du radiateur 11 pour la fixation du joint au radiateur, et une deuxième partie relativement plus souple 17, comportant une ou plusieurs lèvres d'étanchéité flexibles 170, qui s'étendent sous l'organe de connexion formé par la partie relativement plus rigide 16, pour venir obturer de façon continue le passage d'air entre le fond du radiateur et la traverse support de radiateur et ainsi assurer la fonction d'étanchéité.

Le joint d'étanchéité 15 est formé d'une seule pièce par extrusion de matériaux polymère thermoplastique, chacune des première et deuxième parties 16 et 17 étant réalisée en un matériau à dureté différente pour obtenir les caractéristiques souhaitées associées respectivement à la première partie relativement plus rigide et à la deuxième partie relativement plus souple. Ainsi, la ou les lèvres d'étanchéité 170 présentent une dureté plus faible que le profilé 16 formant organe de connexion avec la joue inférieure 13 du radiateur 11. L'avantage de prévoir une dureté plus faible pour la ou les lèvres d'étanchéité 170 est ainsi de faciliter leur flexion lorsque le radiateur 11 équipé du joint 15 vient se poser verticalement sur la traverse support de radiateur 14 en les écrasant, ce qui favorise la fonction d'étanchéité.

Comme illustré sur les figures, l'organe de connexion 16 présente une section transversale en forme de U, comportant une âme 160, disposée de façon à venir s'étendre en regard de la face de fond 130 du radiateur 11, sur toute la largeur de celui-ci, et deux branches 161, 162.

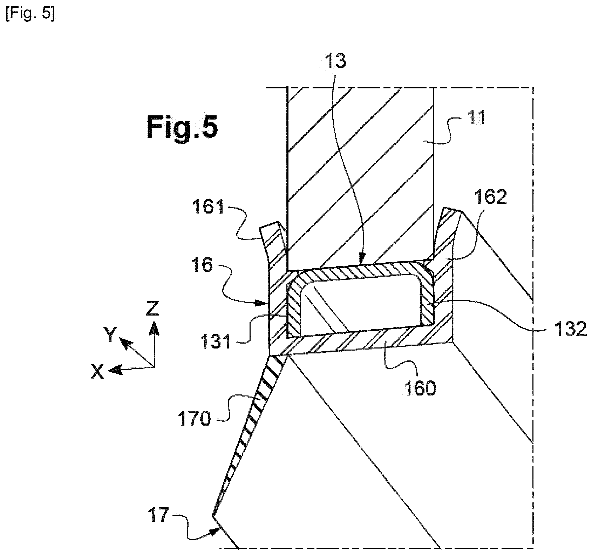

Suivant l'exemple de réalisation illustré à la figure 5, chaque branche 161, 162 du profilé en U formant l'organe de connexion 16 est adaptée à s'engager sur un bord tombé respectif 131, 132 de la joue inférieure 13 du radiateur 11. Plus précisément, suivant l'exemple de réalisation de la figure 5, les faces internes en regard l'une de autre des branches respectives 161, 162 du profilé en U sont adaptées pour coopérer par friction (ou montage serré) avec les parois externes des bords tombés respectifs 131, 132 de la joue inférieure du radiateur. Dans cette disposition, le cispositif d'étanchéité encadre complètement par l'extérieur les deux bords tombés de la joue inférieure du radiateur.

Selon un autre mode de réalisation, comme illustré sur les autres figures, chaque branche 161, 162 du profilé en U comportant une gorge de clipsage, respectivement 1610, 1620, dans laquelle vient se clipser un bord tombé respectif de la paire de bords tombés opposés 131, 132 de la joue inférieure 13 du radiateur 11.

Chaque branche 161, 162 du profilé en U est pour ce faire constituée deux parois, externe et interne, en vis-à-vis et distantes l'une de l'autre, respectivement 1611, 1612 et 1621, 1622, et chaque gorge de clipsage 1610, 1620 s'étend entre ces deux parois en vis-à-vis distantes l'une de l'autre des branches respectives du profilé en U. Ainsi, les branches 161, 162 du profilé en U forment chacune respectivement un premier et un deuxième moyen de clipsage avec un bord tombé respectif 131, 132 de la joue inférieure 13 du radiateur 11. Les gorges de clipsage 1610, 1620 des branches du profilé en U forment donc deux rainures ouvertes vers le haut, recevant chacune un bord tombé de la joue inférieure du radiateur.

Les gorges de clipsage 1610, 1620 de chaque branche du profilé en U présentent un profil sensiblement rectangulaire défini par les paires de parois respectives externe et interne 1611, 1612 et 1621, 1622. La distance séparant lesdites parois en vis-à-vis des gorges de clipsage de chaque branche du profilé en U, est adaptée à l'épaisseur des bords tombés de la joue inférieure du radiateur, de façon à permettre de recevoir en force par clipsage ces bords tombés dans les gorges de clipsage respectives des branches du profilé en U. Par ailleurs, la profondeur des gorges de clipsage est adaptée à la hauteur des bords tombés de la joue inférieure. Ainsi, les faces internes opposées des gorges de clipsage 1610, 1620 coopèrent par friction (ou montage serré) respectivement avec les parois interne et externe de chaque bord tombé respectif. Dans cette disposition, le dispositif d'étanchéité encadre complètement par l'extérieur les deux bords tombés de la joue inférieure du radiateur.

Les faces internes des gorges de clipsage, par exemple les faces internes des parois internes 1612, 1622 respectives des gorges de clipsage 1610, 1620, comprennent préférentiellement des nervures flexibles 1613, 1623, faisant saillie vers l'intérieur de la gorge et destinées à se déformer élastiquement lors de l'insertion des bords tombés respectifs de la joue inférieure, assurant ainsi un ajustement serré des bords tombés dans les gorges de clipsage respectives. Ces nervures permettent également de rendre malaisé le retrait des bords tombés de leur gorge de clipsage respective.

Les gorges de clipsage de chaque branche du profilé en U présentent un profil constant sur toute la longueur du joint d'étanchéité. Les gorges de clipsage de chaque branche du U présentent préférentiellement un profil dissymétrique. Ainsi, les parois externes respectives 1611 et 1621 des branches du profilé en U sont plus hautes que les parois internes respectives 1612 et 1622. Plus précisément, les parois externes respectives 1611 et 1621 des branches du profilé en U sont dimensionnées de façon à venir prendre appui contre une portée des faces transversales respectives du radiateur s'étendant au dessus de la joue inférieure lorsque les bords tombés de la joue inférieure sont clipsés dans les gorges de clipsage. La tenue du joint sous le radiateur s'en trouve ainsi encore améliorée.

Selon un mode de réalisation, la partie relativement plus souple du joint d'étanchéité de l'invention peut être constituée d'une unique lèvre d'étanchéité 170. Comme illustré par exemple sur la figure 5, cette unique lèvre d'étanchéité 170 s'étend depuis l'une des branches du profilé en U.

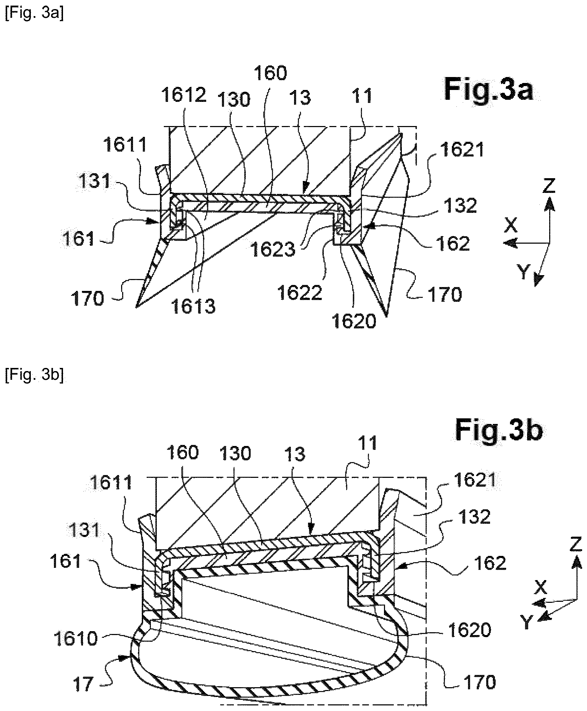

Selon un autre mode de réalisation, la partie relativement plus souple du joint d'étanchéité de l'invention comprend au moins une lèvre d'étanchéité 170 s'étendant depuis chaque branche du profilé en U. Comme illustré sur l'exemple de la figure 1, ainsi que sur les figures 3a à 3c, les lèvres d'étanchéité respectives 170 de la partie relativement plus souple 17 du joint d'étanchéité 15 s'étendent depuis l'extrémité libre des branches respectives 161, 162 du profilé en U, à l'opposé de l'âme 160 du U par rapport aux gorges de clipsage 1610, 1620 des branches respectives du profilé en U. Ainsi, selon ce mode de réalisation, lorsque le joint est fixé sous le radiateur, l'âme 160 du profilé en U forme un talon qui vient en appui avec la face de fond 130 du radiateur s'étendant entre les deux bords tombés 131, 132. Dans cette position montée du joint 15 sous le radiateur, les bords tombés 131, 132 de la joue inférieure sont clipsés avec ajustement serré dans les gorges de clipsage 1610, 1620 des branches respectives 161, 162 du profilé en U, tandis que l'âme 160 du profilé en U est en appui contre la face de fond 130 du radiateur et les parois externes respectives 1611 et 1621 des branches du profilé en U sont en appui contre les faces transversales respectives de part et d'autre du radiateur, soit contre les parois extérieures respectives des bords tombés de la joue inférieure 13 du radiateur, en s'étendant jusqu'au-dessus de la joue inférieure 13. Cette disposition procure un maintien optimal du joint d'étanchéité sous le radiateur.

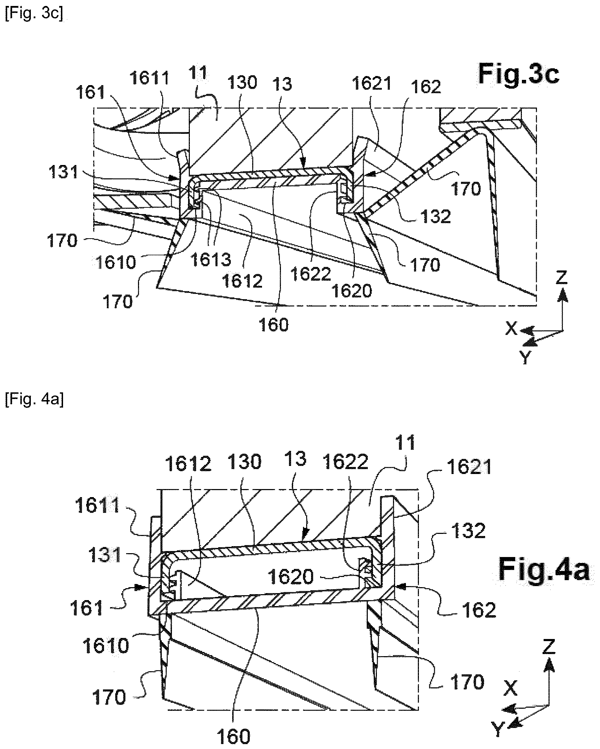

Selon un autre mode de réalisation, comme illustré sur l'exemple des figures 4a-4c, les lèvres d'étanchéité respectives 170 de la partie relativement plus souple 17 du joint d'étanchéité 15 s'étendent depuis le pied des branches respectives 161, 162 du profilé en U, à l'opposé des gorges de clipsage 1610, 1620 des branches respectives du profilé en U par rapport à l'âme 160 du profilé en U. Ainsi, selon ce mode de réalisation, dans la position montée du joint 15 sous le radiateur 11, les bords tombés 131, 132 de la joue inférieure 13 sont clipsés avec ajustement serré dans les gorges de clipsage 1610, 1620 des branches respectives 161, 162 du profilé en U et les parois externes 1611 et 1621 des branches respectives du profilé en U viennent en appui contre les faces transversales respectives de part et d'autre du radiateur, soit contre les parois extérieures respectives des bords tombés de la joue inférieure 13 du radiateur, en s'étendant jusqu'au -dessus de la joue inférieure 13, tandis que l'âme 160 du profilé en U s'étend sensiblement à distance de la face de fond 130 du radiateur 11. A nouveau, dans cette disposition, comme indiqué précédemment, le dispositif d'étanchéité encadre complètement par l'extérieur les deux bords tombés de la joue inférieure du radiateur.

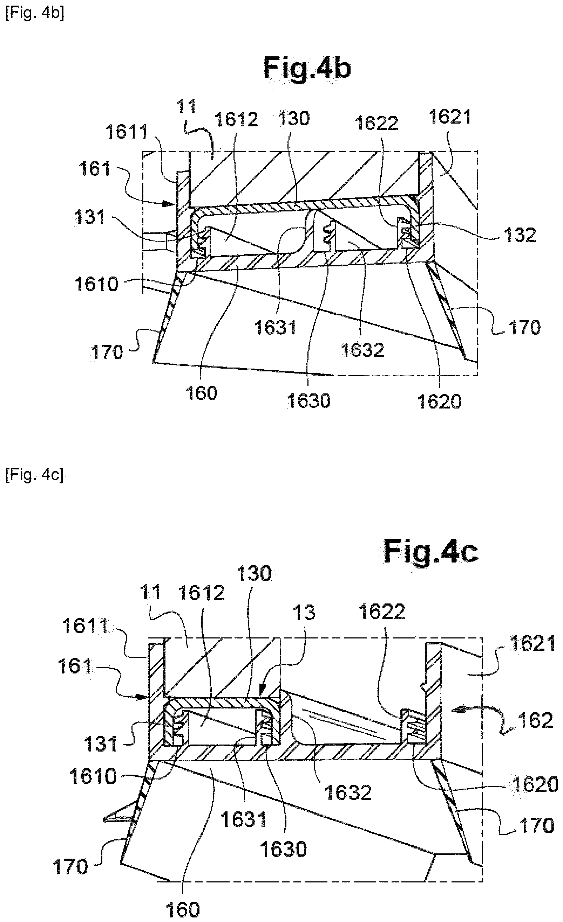

Aussi, selon cet autre mode de réalisation, comme illustré aux figures 4b et 4c, l'âme 160 du profilé en U peut comporter une gorge de clipsage intermédiaire 1630 agencée entre les gorges de clipsage 1610, 1620 des branches respectives 161, 162 du profilé U. Cette gorge de clipsage intermédiaire 1630 est délimitée par deux parois internes 1631 et 1632 qui s'étendent chacune respectivement en vis-à-vis de la paroi interne des gorges de clipsage 1610 et 1620 des branches respectives du profilé en U. Ainsi, pour une même section du profilé en U, le joint 15 pourra s'adapter à différentes épaisseurs de radiateur, respectivement une première épaisseur relativement plus grande en utilisant ensemble les gorges de clipsage 1610, 1620 des branches respectives 161, 162 du profilé en U, comme illustré à la figure 4b, et une seconde épaisseur relativement plus petite en utilisant ensemble la gorge de clipsage intermédiaire 1630 avec par exemple la gorges de clipsage 1610 de la branche 161 du profilé en U, comme illustré à la figure 4c.

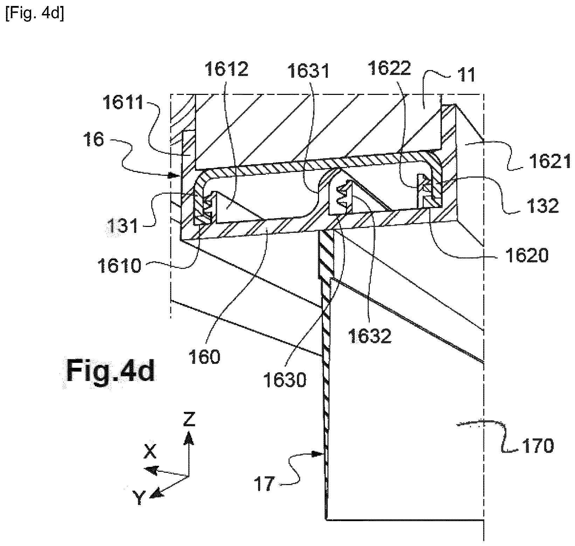

On va maintenant décrire plusieurs configurations possibles pour les lèves d'étanchéité de la partie relativement plus souple du joint d'étanchéité selon l'invention. Comme illustré à la figure 4a, les lèvres d'étanchéité respectives 170 de la partie relativement plus souple 17 du joint d'étanchéité 15, qui sont formées sous le profilé en U de la partie relativement plus rigide 16 du joint, sont au nombre de deux et s'étendent depuis chaque branche respective du profilé en U, en l'occurrence depuis le pied de chaque branche du profilé en U dans l'exemple de la figure 4a, suivant deux plans verticaux transversaux parallèles, soit suivant des plans sensiblement orthogonaux au plan de l'âme du profilé en U. Egalement, comme illustré sur la figure 4d, le joint d'étanchéité peut comprend une unique lèvre d'étanchéité 170, agencée par exemple sous la gorge de clipsage intermédiaire 1630 agencée entre les gorges de clipsage 1610, 1620 des branches respectives 161, 162 du profilé U.

Comme illustré à la figure 3a, les lèvres d'étanchéité respectives 170 formées au niveau des branches respectives du U et en l'occurrence de leur extrémité libre selon l'exemple de la figure 3a, peuvent également s'étendre sous le profilé en U suivant des plans respectifs divergents par rapport au plan de l'âme du U.

Comme illustré à la figure 3b, les lèvres d'étanchéité respectives 170 peuvent s'étendre depuis chaque branche respective du profilé en U, en se rejoignant de façon à former un unique bourrelet sous le profilé en U dont la concavité est orientée vers l'âme du U. Une telle configuration de la partie relativement plus souple du joint d'étanchéité en un bourrelet d'une seule pièce sous le profilé en U est particulièrement avantageuse pour permettre au joint de s'adapter à des zones d'accostage difficile tout en maintenant la fonction d'étanchéité.

Egalement, comme illustré sur l'exemple de la figure 3c, on peut avoir plusieurs lèvres d'étanchéité 170 distinctes qui s'étendent depuis au moins une branche et, en l'occurrence suivant l'exemple de la figure 3, depuis chaque branche 161, 162 du profilé en U et ce, suivant différents plans d'orientation respectifs, selon les besoins d'étanchéité dans la zone.

L'ensemble des variantes de configuration de la partie relativement plus souple 17 du joint d'étanchéité 15, qui ont été décrits précédemment, est applicable indifféremment aux différents modes de réalisation décrits pour le profilé en U du joint.

## Revendications

1. Dispositif d'étanchéité apte à obturer un passage d'air sous un radiateur (11) d'un véhicule automobile, comprenant un joint d'étanchéité (15) en deux parties, respectivement une partie relativement plus rigide (16) et une partie relativement plus souple (17), la partie relativement plus rigide étant formé d'un profilé adapté à coopérer par clipsage avec une joue inférieure (13) du radiateur constituée d'une plaque (130) formant le fond du radiateur et présentant une paire de bords tombés opposés (131, 132) s'étendant sensiblement verticalement sous le fond (130) du radiateur et la partie relativement plus souple comportant au moins une lèvre d'étanchéité flexible (170) adaptée à s'étendre sous le profilé à l'opposé de la joue inférieure lorsque le joint d'étanchéité est monté sous le radiateur, **caractérisé en ce que** le profilé présente une section transversale en forme de U, dont chaque branche (161, 162) est adaptée à s'engager sur un bord tombé respectif de ladite paire de bords tombés opposés de la joue inférieure (13) du radiateur, lesdites branches du profilé en U étant adaptées pour coopérer par friction avec au moins une paroi externe d'un bord tombé respectif de ladite paire de bords tombés opposés de la joue inférieure (13) du radiateur, tandis que l'âme (160) du profilé en U est destinée à s'étendre en regard d'une face de fond (130) du radiateur s'étendant entre ladite paire de bords tombés.

2. Dispositif selon la revendication 1, **caractérisé en ce que** chaque branche (161, 162) du profilé en U comporte une gorge de clipsage (1610, 1620) dans laquelle est destiné à venir se clipser un bord tombé respectif (131, 132) de ladite paire de bords tombés opposés de la joue inférieure du radiateur.

3. Dispositif selon la revendication 1 ou 2, **caractérisé en ce qu'**il comprend au moins une lèvre d'étanchéité (170) s'étendant depuis au moins une branche du profilé en U.

4. Dispositif selon l'une quelconque des revendications 1 à 3, **caractérisé en ce qu'**il comprend au moins une lèvre d'étanchéité (170) formées au niveau de chaque branche (161, 162) du profilé en U, lesdites lèvres d'étanchéité s'étendant dans des plans sensiblement orthogonaux au plan de l'âme (160) du profilé en U.

5. Dispositif selon l'une quelconque des revendications 1 à 3, **caractérisé en ce qu'**il comprend au moins une lèvre d'étanchéité (170)formées au niveau de chaque branche (161, 162) du profilé en U, lesdites lèvres d'étanchéité s'étendant suivant des plans respectifs divergents par rapport au plan de l'âme (160) du profilé en U.

6. Dispositif selon l'une quelconque des revendications 1 à 3, **caractérisé en ce qu'**il comprend au moins une lèvre d'étanchéité (170) formées au niveau de chaque branche (161, 162) du profilé en U, lesdites lèvres d'étanchéité se rejoignant de façon à former un unique bourrelet dont la concavité est orientée vers l'âme du profilé en U.

7. Dispositif selon l'une quelconque des revendications 1 à 3, **caractérisé en ce qu'**il comprend au moins deux lèvres d'étanchéité (170) s'étendent depuis au moins une branche (161, 162) du profilé en U suivant différents plans d'orientation respectifs.

8. Dispositif selon l'une quelconque des revendications précédentes, **caractérisé en ce que** chaque lèvre d'étanchéité (170) s'étend depuis une extrémité libre d'une branche respective (161, 162) du profilé en U, à l'opposé de l'âme (160) du profilé en U par rapport aux branches respectives du profilé en U.

9. Dispositif selon la revendication 8, **caractérisé en ce que** l'âme (160) du profilé en U forme un talon destiné à venir en appui avec la face de fond (130) du radiateur s'étendant entre les deux bords tombés (131, 132) de ladite paire de bords tombés opposés de joue inférieure (13) du radiateur.

10. Dispositif selon l'une quelconque des revendications 1 à 7, **caractérisé en ce que** chaque lèvre d'étanchéité (170) s'étend depuis un pied d'une branche respective (161, 162) du profilé en U, à l'opposé des branches respectives (161, 162) du U par rapport à l'âme (160) du profilé en U.

11. Dispositif selon les revendications 2 et 10, **caractérisé en ce que** l'âme (160) du profilé en U comporte une gorge de clipsage intermédiaire (1630) agencée entre les gorges de clipsage (1610, 1620) des branches respectives (161, 162) du profilé en U.

12. Véhicule automobile comprenant une traverse (14) support de radiateur s'étendant en travers d'un compartiment moteur du véhicule et un module d'échange de chaleur (10) comprenant un radiateur (11) positionné sur la traverse (14) support de radiateur, une joue inférieure (13) couplée au radiateur présentant une paire de bords tombés opposés et un dispositif d'étanchéité selon l'une quelconque des revendications précédentes, ladite au moins une lèvre d'étanchéité (170) étant adaptée pour venir obturer de façon continue des passages d'air entre le fond du radiateur et la traverse support de radiateur.]

## Patentansprüche

1. Dichtungsvorrichtung, die geeignet ist, einen Luftdurchgang unter einem Kühler (11) eines Kraftfahrzeugs zu verschließen, mit einer Dichtung (15) aus zwei Teilen, nämlich einem relativ steiferen Teil (16) und einem relativ weicheren Teil (17), wobei der relativ steifere Teil aus einem Profil gebildet wird, das so beschaffen ist, dass es durch Einklipsen mit einer unteren Wange (13) des Kühlers zusammenwirkt, die aus einer Platte (130) besteht, die den Boden des Kühlers bildet und ein Paar von gegenüberliegenden Fallkanten (131, 132) aufweist, die sich im Wesentlichen vertikal unter dem Boden (130) des Kühlers erstrecken und der relativ weichere Teil mindestens eine flexible Dichtlippe (170) aufweist, die so beschaffen ist, dass sie sich unter dem Profil gegenüber der unteren Wange erstreckt, wenn die Dichtung unter dem Kühler montiert ist, **dadurch gekennzeichnet, dass** das Profil einen U-förmigen Querschnitt aufweist, wobei jeder Schenkel (161, 162) so beschaffen ist, dass er mit einer jeweiligen Fallkante des Paars von gegenüberliegenden Fallkanten der unteren Wange (13) des Kühlers in Eingriff kommt, wobei die Schenkel des U-Profils so beschaffen sind, dass sie mit mindestens einer Außenwand einer jeweiligen Fallkante des Paars von gegenüberliegenden Fallkanten der unteren Wange (13) des Kühlers reibschlüssig zusammenwirken, während der Steg (160) des U-Profils dazu bestimmt ist, sich gegenüber einer Bodenfläche (130) des Kühlers zu erstrecken, die sich zwischen dem Paar von Fallkanten erstreckt.

2. Vorrichtung nach Anspruch 1, **dadurch gekennzeichnet, dass** jeder Schenkel (161, 162) des U-Profils eine Einklipsnut (1610, 1620) aufweist, in die eine jeweilige Fallkante (131, 132) des Paares von gegenüberliegenden Fallkanten der unteren Wange des Kühlers eingeklipst werden soll.

3. Vorrichtung nach Anspruch 1 oder 2, **dadurch gekennzeichnet, dass** sie mindestens eine Dichtlippe (170) aufweist, die sich von mindestens einem Schenkel des U-Profils aus erstreckt.

4. Vorrichtung nach einem der Ansprüche 1 bis 3, **dadurch gekennzeichnet, dass** sie mindestens eine Dichtlippe (170) aufweist, die an jedem Schenkel (161, 162) des U-Profils ausgebildet ist, wobei sich die Dichtlippen in Ebenen erstrecken, die im Wesentlichen orthogonal zur Ebene des Stegs (160) des U-Profils sind.

5. Vorrichtung nach einem der Ansprüche 1 bis 3, **dadurch gekennzeichnet, dass** sie mindestens eine Dichtlippe (170) aufweist, die an jedem Schenkel (161, 162) des U-Profils ausgebildet ist, wobei sich die Dichtlippen entlang der jeweiligen Ebenen erstrecken, die von der Ebene des Stegs (160) des U-Profils divergieren.

6. Vorrichtung nach einem der Ansprüche 1 bis 3, **dadurch gekennzeichnet, dass** sie mindestens eine Dichtlippe (170) aufweist, die an jedem Schenkel (161, 162) des U-Profils ausgebildet ist, wobei die Dichtlippen so zusammenlaufen, dass sie einen einzigen Wulst bilden, dessen Konkavität zum Steg des U-Profils hin gerichtet ist.

7. Vorrichtung nach einem der Ansprüche 1 bis 3, **dadurch gekennzeichnet, dass** sie mindestens zwei Dichtlippen (170) aufweist, die sich von mindestens einem Schenkel (161, 162) des U-Profils entlang unterschiedlicher jeweiliger Ausrichtungsebenen erstrecken.

8. Vorrichtung nach einem der vorhergehenden Ansprüche, **dadurch gekennzeichnet, dass** sich jede Dichtlippe (170) von einem freien Ende eines jeweiligen Schenkels (161, 162) des U-Profils gegenüber dem Steg (160) des U-Profils in Bezug auf die jeweiligen Schenkel des U-Profils erstreckt.

9. Vorrichtung nach Anspruch 8, **dadurch gekennzeichnet, dass** der Steg (160) des U-Profils einen Absatz bildet, der dazu bestimmt ist, an der Bodenfläche (130) des Kühlers anzuliegen, die sich zwischen den beiden Fallkanten (131, 132) des Paars von gegenüberliegenden Fallkanten der unteren Wange (13) des Kühlers erstreckt.

10. Vorrichtung nach einem der Ansprüche 1 bis 7, **dadurch gekennzeichnet, dass** sich jede Dichtlippe (170) von einem Fuß eines jeweiligen Schenkels (161, 162) des U-Profils aus gegenüber den jeweiligen Schenkeln (161, 162) des Us in Bezug auf den Steg (160) des U-Profils erstreckt.

11. Vorrichtung nach Anspruch 2 und 10, **dadurch gekennzeichnet, dass** der Steg (160) des U-Profils eine Zwischen-Einklipsnut (1630) aufweist, die zwischen den Einklipsnuten (1610, 1620) der jeweiligen Schenkel (161, 162) des U-Profils angeordnet ist.

12. Kraftfahrzeug mit einem Kühlerträgerquerträger (14), der sich quer über einen Motorraum des Fahrzeugs erstreckt, und einem Wärmetauschermodul (10) mit einem Kühler (11), der auf dem Kühlerträgerquerträger (14) positioniert ist, einer mit dem Kühler gekoppelten unteren Wange (13) mit einem Paar gegenüberliegender Fallkanten und einer Dichtungsvorrichtung nach einem der vorhergehenden Ansprüche, wobei die mindestens eine Dichtlippe (170) so beschaffen ist, dass sie die Luftdurchgänge zwischen dem Boden des Kühlers und dem Kühlerträgerquerträger kontinuierlich verschließt.

## Claims

1. Sealing device adapted to block an air passage under a radiator (11) of an automobile vehicle, comprising a seal (15) in two parts, respectively a relatively more rigid part (16) and a relatively more flexible part (17), the relatively more rigid part being formed of a profile adapted to cooperate clipping fashion with a lower plate (13) of the radiator consisting of a plate (130) forming the bottom of the radiator and featuring a pair of opposed raised edges (131, 132) extending substantially vertically under the bottom (130) of the radiator and the relatively more flexible part including at least one flexible lip seal (170) adapted to extend under the profile opposite the lower plate when the seal is mounted under the radiator, **characterized in that** the profile has a U-shaped cross section each branch (161, 162) of which is adapted to engage over a respective raised edge of said pair of opposed raised edges of the lower plate (13) of the radiator, said branches of the U-shaped profile being adapted to cooperate by friction with at least one external wall of a respective raised edge of said pair of opposed raised edges of the lower plate (13) of the radiator, while the web (160) of the U-shaped profile is intended to extend opposite a bottom face (130) of the radiator extending between said pair of raised edges.

2. Device according to Claim 1, **characterized in that** each branch (161, 162) of the U-shaped profile includes a clipping groove (1610, 1620) in which is intended to come to be clipped a respective raised edge (131, 132) of said pair of opposed raised edges of the lower plate of the radiator.

3. Device according to Claim 1 or 2, **characterized in that** it comprises at least one lip seal (170) extending from at least one branch of the U-shaped profile.

4. Device according to any one of Claims 1 to 3, **characterized in that** it comprises at least one lip seal (170) formed at the level of each branch (161, 162) of the U-shaped profile, said lip seals extending in planes substantially orthogonal to the plane of the web (160) of the U-shaped profile.

5. Device according to any one of Claims 1 to 3, **characterized in that** it comprises at least one lip seal (170) formed at the level of each branch (161, 162) of the U-shaped profile, said lip seals extending in respective planes diverging relative to the plane of the web (160) of the U-shaped profile.

6. Device according to any one of Claims 1 to 3, **characterized in that** it comprises at least one lip seal (170) formed at the level of each branch (161, 162) of the U-shaped profile, said lip seals joining so as to form a single bead the concavity of which is oriented toward the web of the U-shaped profile.

7. Device according to any one of Claims 1 to 3, **characterized in that** it comprises at least two lip seals (170) extending from at least one branch (161, 162) of the U-shaped profile in different planes with respective orientations.

8. Device according to any one of the preceding claims, **characterized in that** each lip seal (170) extends from a free edge of a respective branch (161, 162) of the U-shaped profile, opposite the web (160) of the U-shaped profile relative to the respective branches of the U-shaped profile.

9. Device according to Claim 8, **characterized in that** the web (160) of the U-shaped profile forms a claw intended to come to bear with the bottom face (130) of the radiator extending between the two raised edges (131, 132) of said pair of opposed raised edges of the lower plate (13) of the radiator.

10. Device according to any one of Claims 1 to 7, **characterized in that** each lip seal (170) extends from a foot of a respective branch (161, 162) of the U-shaped profile, opposite/away from the respective branches (161, 162) of the U-shape relative to the web (160) of the U-shaped profile.

11. Device according to Claims 2 and 10, **characterized in that** the web (160) of the U-shaped profile includes an intermediate clipping groove (1630) arranged between the clipping grooves (1610, 1620) of the respective branches (161, 162) of the U-shaped profile.

12. Automobile vehicle comprising a radiator support crossmember (14) extending across an engine compartment of the vehicle and a heat exchange module (10) comprising a radiator (11) positioned on the radiator support crossmember (14), a lower plate (13) coupled to the radiator featuring a pair of opposed raised edges and a sealing device according to any one of the preceding claims, said at least one lip seal (170) being adapted to come to block continuously air passages between the bottom of the radiator and the radiator support crossmember.
